## Europäisches Patentamt
## European Patent Office
## Office européen des brevets

(19)

(11) Veröffentlichungsnummer : **0 447 768 B1**

(12)

# EUROPÄISCHE PATENTSCHRIFT

(45) Veröffentlichungstag der Patentschrift :
26.04.95 Patentblatt 95/17

(51) Int. Cl.$^6$ : **G02B 6/42**

(21) Anmeldenummer : **91101251.6**

(22) Anmeldetag : **31.01.91**

(54) **Lasermodul.**

(30) Priorität : **23.03.90 DE 4009380**

(43) Veröffentlichungstag der Anmeldung :
**25.09.91 Patentblatt 91/39**

(45) Bekanntmachung des Hinweises auf die
Patenterteilung :
**26.04.95 Patentblatt 95/17**

(84) Benannte Vertragsstaaten :
**AT BE CH DE ES FR GB IT LI NL SE**

(56) Entgegenhaltungen :
DE-C- 3 705 408
FR-A- 2 418 943
GB-A- 2 184 289
US-A- 4 868 361
PATENT ABSTRACTS OF JAPAN Band 6, Nr.
176 (E-30), 10. September 1982 ; & JP-A-57 093
590

(73) Patentinhaber : **Alcatel SEL
Aktiengesellschaft
Lorenzstrasse 10
D-70435 Stuttgart (DE)**
(84) **DE**
Patentinhaber : **ALCATEL N.V.
Strawinskylaan 341,
(World Trade Center)
NL-1077 XX Amsterdam (NL)**
(84) **BE CH ES FR GB IT LI NL SE AT**

(72) Erfinder : **Kaiser, Manfred
Zeppelinstrasse 2
W-7254 Hemmingen (DE)**

(74) Vertreter : **Pohl, Herbert, Dipl.-Ing et al
Alcatel SEL AG
Patent- und Lizenzwesen
Postfach 30 09 29
D-70449 Stuttgart (DE)**

EP 0 447 768 B1

## Beschreibung

Die Erfindung geht von einem Lasermodul gemäß dem Oberbegriff des Anspruchs 1 aus.

Durch die DE 34 13 749 A1 ist ein Lasermodul bekannt, bei dem das rotationssymmetrische Gehäuse aus zwei Teilen besteht. In dem einen Teil ist ein in einem Gehäuse befindlicher Halbleiterlaser fest angeordnet. Im anderen Teil sind die Abbildungsoptik und der Anschluß-Lichtwellenleiter fest angeordnet. Die Position des Halbleiterlasers wird über die Paßform des Lasergehäuses in einer Ausnehmung in dem einen Gehäuseteil bestimmt. Das Laserchip befindet sich in der Regel nicht exakt in der Sollage, sondern ist gegenüber dieser im Bereich von einigen zig Nanometern im Raum versetzt. Damit stimmt aber einerseits die optische Achse des Lasers mit der Längsachse des zugehörigen Modulgehäuseteils nicht exakt überein, andererseits variiert die Laserposition in Achsenlängsrichtung um die Sollage. Diese Abweichungen werden durch Justieren der beiden Gehäuseteile des Moduls zueinander auf maximale Intensität des am Ende des Anschluß-Lichtwellenleiters austretenden Lichtes ausgeglichen. In dieser Zuordnung werden die beiden Gehäuseteile durch Schweißen, Löten oder Kleben fest miteinander verbunden. Die beim Schweißen und Löten partiell auftretende Wärmebehandlung der beiden Gehäuseteile kann Formveränderungen zur Folge haben, die eine Dejustierung bewirken. Auch das Kleben ist im Hinblick auf die mechanische und thermische Stabilität der Verbindung kritisch. Ein Ausgleich der mit Schielwinkel bezeichneten Abweichung zwischen der optischen Achse des Laserchips und der mechanischen Achse des Lasergehäuses erfolgt nicht. Darüber hinaus ist die Zweiteilung des Modulgehäuses ungünstig, da sich einseitig einwirkende Temperaturänderungen nicht schnell und gleichmäßig genug über die metallischen Schweiß- oder Lötbrücken oder die Kleberverbindung auf beide Gehäuseteile verteilen können. Dies ist jedoch von gravierender Bedeutung, da partielle temperaturbedingte Verformungen des Lasergehäuses Einfluß auf die Justage nehmen. Im übrigen wird durch die feste Zuordnung der Abbildungsoptik zum Anschluß-Lichtwellenleiter auf eine weitere Optimierungsmöglichkeit verzichtet. Im übrigen ist die Zweiteilung des Lasergehäuses aufgrund höherer Herstellungskosten unwirtschaftlich.

Ein Lasermodul nach dem Oberbegriff des Anspruchs 1 ist aus dem Dokument "PATENT ABSTRACTS OF JAPAN, Band 6, Nr. 176 (E-30), 10. September 1982 zu JP-A-57093590 (NEC) 10.06.1982" bekannt. Bei dem Modulgehäuse ist ein inneres Wandstück einer Ausnehmung für die Aufnahme des Gehäuses eines Halbleiterelementes mit einer von Lötzinn nicht benetzbaren Substanz ausgekleidet. Das Halbleiterelement ist in der Ausnehmung auf die Mittelachse des Modulgehäuses ausgerichtet und sein Gehäuse durch eine Lötbrücke so mit dem unbenetzten äußeren Wandstück des Modulgehäuses verbunden, daß der Gehäuseflansch des Halbleiterelementes sich außerhalb des Modulgehäuses befindet.

Die Aufgabe der Erfindung besteht darin, ein Lasermodul zu schaffen, mit dem eine so optimale Kopplung eines Lasers an einen Lichtwellenleiter möglich ist, daß sogar mit einem unterhalb der Grenzwellenlänge einer Einmodenfaser arbeitender Halbleiterlaser ein stabiler Einmodenbetrieb möglich ist.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß das Modulgehäuse einteilig und aus Metall ist und damit einerseits wirtschaftlich herstellbar ist und andererseits Temperaturänderungen durch die ungehinderte höhere Leitfähigkeit des Gehäuses ohne Auswirkung bleiben, daß durch das Einstellen des Lasers gegenüber dem Modulgehäuse die optische Achse mit der mechanischen Achse des Modulgehäuses zur Deckung gebracht werden kann, so daß die Abstrahlung des Lasers konzentrisch in die Abbildungsoptik eingekoppelt wird, daß durch das vergrößernde Abbildungsverhältnis der Optik die axiale Einstrahlung in den Kern des Lichtwellenleiters unter einem Winkel erfolgt, der eine optimale Einkopplung der Lichtleistung ermöglicht, und daß der Anschluß-Lichtwellenleiter in der konzentrischen Bohrung des Modulgehäuses auf eine optimale Abbildung des Laserlichtflecks auf der Stirnfläche des Lichtwellenleiters vor der Befestigung einstellbar ist.

Anhand eines Ausführungsbeispiels wird die Erfindung in Verbindung mit den Zeichnungen nachfolgend näher erläutert. Es zeigen:

Fig. 1      das Strahlungsdiagramm einer handelsüblichen Halbleiter-Laserdiode,

Fig. 2      die Fokussierung einer Laserstrahlung gemäß Fig. 1 auf den Kernbereich eines Lichtwellenleiters durch eine Abbildungsoptik mit vergrößerndem Abbildungsverhältnis,

Fig. 3      ein Lasermodul gemäß der Erfindung im Schnitt III-III der Fig. 4,

Fig. 4      das Lasermodul im Schnitt IV-IV der Fig. 3,

Fig. 5      in schematischer Darstellung Maßnahmen zum Ausgleich bei divergierender mechanischer und optischer Achse des Lasers.

In der DE 36 37 097 A1 ist im einzelnen dargelegt, daß Monomode-Lichtwellenleiter nur für Wellenlängen oberhalb einer Grenzwellenlänge monomodig sind, d.h., oberhalb der Grenzwellenlänge ist nur der Grundmode ausbreitungsfähig. Dagegen sind bei Wellenlängen unterhalb der Grenzwellenlänge mehrere Moden ausbreitungsfähig.

Im Weitverkehr hat sich als optisches Übertragungsmedium ein Monomode-Lichtwellenleiter, weiterhin mit LWL bezeichnet, durchgesetzt, der oberhalb der Grenzwellenlänge im Bereich von 1300 bis 1600 nm die niedrigste Dämpfung und Dispersion hat. Dieser für den Weitverkehr z.Zt. optimale LWL-Typ wird bereits in erheblichen Mengen zu entsprechenden Preisen hergestellt.

Es wurde bereits erkannt, daß dieser Monomode-LWL auch für den optischen Teilnehmeranschluß ein geeigneter LWL-Typ ist. Die hohen Kosten der bisher als notwendig erachteten elektro-optischen bzw. opto-elektrischen Wandler standen jedoch der Einführung von optischen Breitband-Teilnehmeranschlüssen im Wege.

Unter Inkaufnahme einer erhöhten Dämpfung, die jedoch bei der Anwendung im Teilnehmeranschlußbereich (ca. 6-12 km) ohne weiteres hingenommen werden kann, ist es durch die vorgenannte Patentanmeldung bekannt, mit einem weit unter der Grenzwellenlänge des LWLs arbeitenden Halbleiter-Laser einen stabilen Monomode-Betrieb zu erreichen. Es handelt sich um einen Laser-Typ mit einer Betriebswellenlänge von 780 nm, wie er in CD-Plattenspielern üblich ist und in sehr hohen Stückzahlen hergestellt wird und daher sehr preiswert ist. Als entsprechend preiswerte Empfänger bieten sich Fotodioden auf Siliziumbasis an.

Wie beim vorgenannten Anmeldungsgegenstand besteht auch bei der vorliegenden Erfindung die Aufgabe, mit einem unterhalb der Grenzwellenlänge eines einmodigen LWLs arbeitenden Laser einen stabilen Monomode-Betrieb zu ermöglichen. Dieses läßt sich nur unter optimalen Gegebenheiten erreichen, die im wesentlichen in der geometrischen Zuordnung von Laser und LWL bestehen und von der Einkopplung der Laserstrahlung in den Lichtwellenleiter abhängen.

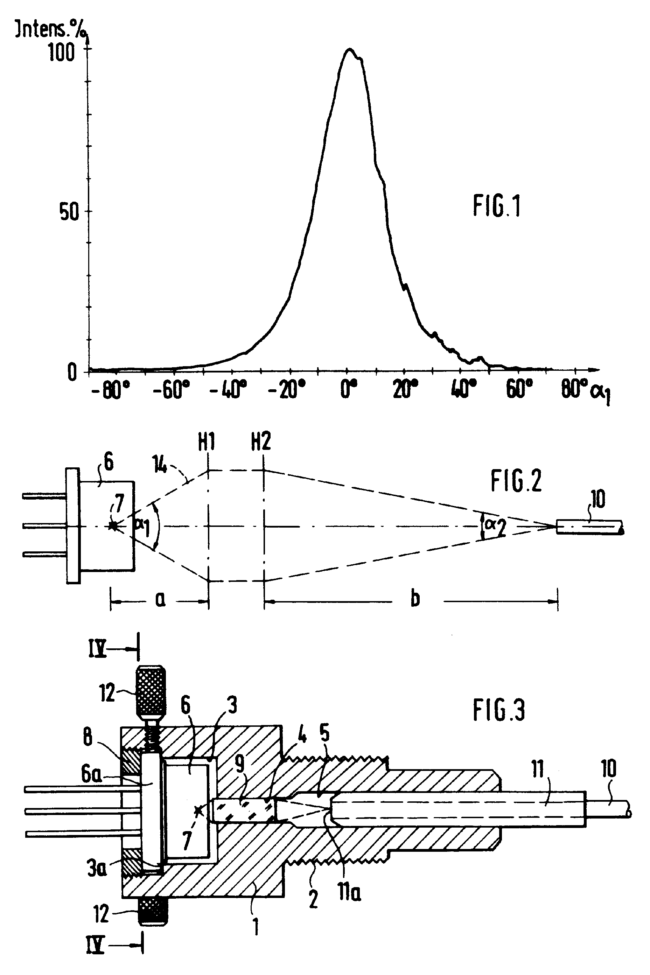

Fig. 1 zeigt den typischen Intensitätsverlauf der abgestrahlten Lichtleistung eines Halbleiter-Lasers in Prozent über den Abstrahlwinkel $\alpha$ 1.

Fig. 2 zeigt die Fokussierung und Einkopplung der abgestrahlten Lichtleistung 14 eines Halbleiter-Lasers 6 im Bereich des Abstrahlwinkels $\alpha$ 1 über eine Abbildungsoptik 9 auf die Kernquerschnittsfläche eines LWLs 10. Die Laserabstrahlung ist stark divergent. Im Hinblick auf die eingangs erwähnte höhere Streckendämpfung ist die Strahlungsleistung des Lasers 6 optimal auszunutzen, z.B. über einen Winkel $\alpha$ 1 von $\pm\,30°$. Der Winkel $\alpha$ 2, unter dem die Laserstrahlung in den LWL 10 eingekoppelt wird, darf jedoch nur so groß wie der Akzeptanzwinkel der Faser sein. Da die lichtabstrahlende Fläche eines Laserchips 7 klein ist gegenüber der Kernquerschnittsfläche des LWLs 10, kann über eine vergrößernde Abbildungsoptik 9 der Raumwinkel $\alpha$ 2 der einzukoppelnden Strahlung gemäß der Beziehung

$$a \cdot \tan \alpha 1/2 \;=\; b \cdot \tan \alpha 2/2$$

reduziert werden, wobei der Vergrößerungsfaktor durch das Verhältnis von Kernquerschnittsfläche zu Strahlfläche des Lasers begrenzt ist.

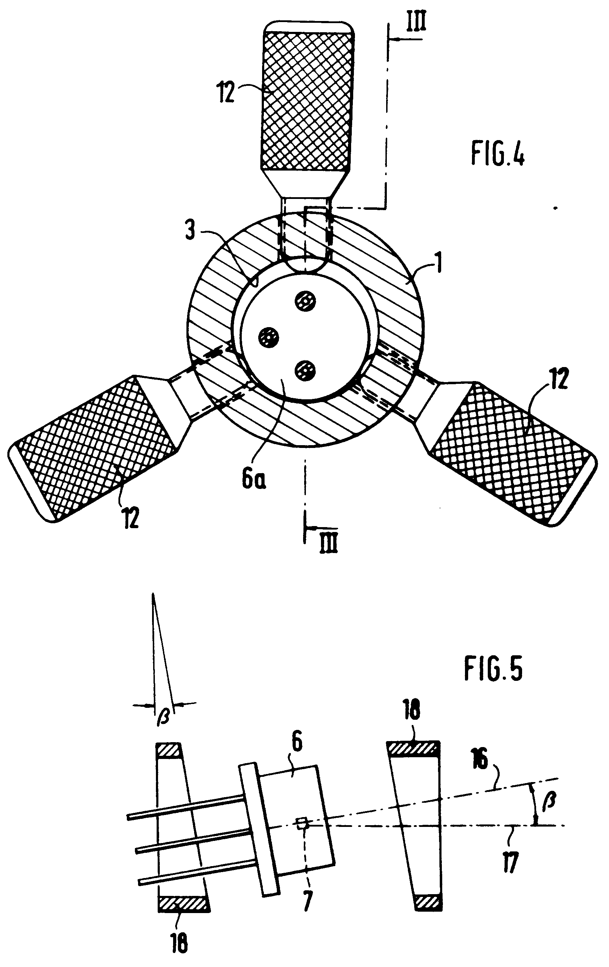

Fig. 3 zeigt ein Lasermodul im Schnitt III-III der Fig. 4, bei dem ein Laser 6 mit einer Betriebswellenlänge von 780 nm und als Anschluß-LWL 10 eine Einmodenfaser verwendet ist.

Das Modengehäuse 1 ist ein rotationssymmetrischer Körper aus einem Metall mit guter Wärmeleitfähigkeit. Das dreigestufte Gehäuse 1 hat eine zentrale Mittelbohrung 4 vom Durchmesser einer vergrößernden Abbildungsoptik 9. An einem Ende hat das Gehäuse 1 eine zur Mittelbohrung 4 konzentrische runde Ausnehmung 3, die nach außen stufenförmig auf einen größeren Durchmesser abgesetzt ist. Die dadurch gegebene ringförmige Anschlagfläche 3a dient als Anlage für den Flansch 6a des Lasers 6 im eingesetzten Zustand. Die Ausnehmung 3 hat einen etwas größeren Durchmesser als das Gehäuse des Lasers 6 bzw. seines rückwärtigen Flansches 6a. Der äußere Teil der stufenförmig abgesetzten Ausnehmung 3 hat ein Innengewinde zur Aufnahme einer Ringmutter 8. Im Bereich des Flansches 6a sind im Modulgehäuse 1 drei im Dreieck auf die Mittelachse gerichtete Stellglieder angeordnet (Fig. 4). Beim vorliegenden Beispiel sind es Stellschrauben 12, die manuell betätigt werden. Es sind aber auch durch Stellmotore betriebene Stellstifte denkbar, deren Bewegung rechnergestützt koordiniert werden. Am anderen Ende hat das Modulgehäuse 1 eine zur Mittelbohrung 4 konzentrische Zylinderbohrung 5. Das vordere Ende des Anschluß-LWLs 10 ist konzentrisch von einer Zylinderhülse 11 umgeben, deren Stirnfläche 11a bis auf den LWL 10 rechtwinklig zur Mittelachse plangeschliffen ist. Die Hülse 11 paßt spielfrei in die Zylinderbohrung 5. Die mittlere Stufe des Modulgehäuses 1 ist mit einem Gewinde 2 versehen, über das das Modul z.B. in einer Halterung befestigt werden kann.

Der an der Anschlagfläche 3a anliegende Laserflansch 6a ist die Bezugsebene des Lasers 6. Gegenüber dieser und der Mittelachse variiert die Lage des Laserchips 7 im Raum um bis zu $\pm\,80$ µm. Werden diese Abweichungen von der Sollage nicht ausgeglichen, dann würde durch den seitlichen Versatz zur Mittelachse das Laserlicht nicht rotationssymmetrisch in den Kern des LWLs 10 eingekoppelt. Schon ein außermittiger Versatz von mehr als 2 µm führt zu störender Anregung des $LP_{11}$-Modes. Zum Ausrichten des Lasers 6 bzw. des Chips 7 auf die Mittelachse sind die Stellschrauben 12 vorgesehen.

Fig. 4 zeigt im Schnitt IV-IV der Fig. 3 die Anordnung der drei Stellschrauben 12, die auf den Flansch 6a des Lasers 6 einwirken. Durch gleichzeitiges Verstellen von jeweils zwei Stellschrauben 12 läßt sich der Laser 6 im Spielraum der Ausnehmung 3 im Modulgehäuse 1 bewegen. Die Einstellung erfolgt im unmodulierten Betriebszustand des Lasers 6 auf maximale Intensität der am Ende des Anschluß-LWLs 10 austretenden Strahlung. Durch Festziehen der zuvor nur leicht angezogenen Ringmutter 8 wird die Einstellung fixiert. Der axiale Toleranzbereich zwischen dem Laserchip 7 und der Abbildungsoptik 9 kann im Extremfall durch Distanzscheiben ausgeglichen werden. Im allgemeinen ist eine Justage hier nicht erforderlich, da sich dieser Fehler nur auf die von der Abbildungsoptik 9 erfaßten Laserlichtabstrahlung auswirkt und relativ gering ist. Anschließend wird die Zylinderhülse 11 in der Bohrung 5 so positioniert und fixiert, daß die durch die Abbildungsoptik 9 vergrößerte Abbildung der Laserlichtfläche genau auf der Stirnfläche 11a der Hülse 11 bzw. der Kernquerschnittsfläche des LWLs 10 erfolgt. Durch die zuvor erfolgte Ausrichtung der optischen Achse des Lasers 6 auf die Mittelachse des Modulgehäuses 1 wird der Laserlichtfleck rotationssymmetrisch auf der Kernquerschnittsfläche abgebildet. Damit ist die Voraussetzung geschaffen, daß der LWL 10 nur im Grundmode angeregt wird. Die Optimierung der Einstellung wird auch hier über die Intensität der am Ende des Anschluß-LWLs 10 austretenden Strahlung erkannt.

Die Abbildungsoptik 9 ist im vorliegenden Beispiel eine Gradienten-Index-Linse mit einem vergrößernden Abbildungs-Verhältnis von 1:3. Letzteres kann je nach Abbildungs-System variieren.

Wie vorbeschrieben, ist es von entscheidender Bedeutung, daß die optische Achse des Lasers 6 auf die Mittelachse des Modulgehäuses 1 ausgerichtet ist. Unter der Masse der im vorliegenden Fall verwendeten Halbleiterlaser gibt es gemäß Fig. 5 Exemplare, bei der die mechanische Achse 16 des Lasers u. die optische Achse 17 des Laserchips 7 relativ stark divergieren. Die als Schielwinkel bezeichnete Abweichung kann dadurch kompensiert werden, daß dem Laser 6 (in Fig. 5 überproportional dargestellt) keilförmig abgeflachte Ausgleichsringe 18 in die Ausnehmung 3 des Modulgehäuses 1 beigelegt werden. Dadurch wird die optische Achse 17 in eine zur Mittelachse parallele Lage gebracht und durch den beschriebenen Justiervorgang sodann mit letzterer zur Deckung gebracht.

Die Verwendung eines einteiligen Metallkörpers als Modulgehäuse garantiert eine dauerhafte form- und temperaturbeständige Zuordnung des Lasers 6 über die Abbildungsoptik 9 zum Anschluß-LWL 10.

Das erfindungsgemäße Modulgehäuse ist natürlich auch für Laser zu benutzen, deren Emissionswellenlänge oberhalb der Grenzwellenlänge der Anschluß- bzw. Streckenfaser liegt. Hier bringt die zentrierte Laser-Faser-Kopplung eine hervorragende Temperaturstabilität.

## Patentansprüche

1. Lasermodul mit einem rotationssymmetrischen Modulgehäuse (1), das eine konzentrische Mittelbohrung (4) hat, in die an einem Ende eine achssymmetrische Ausnehmung (3) zur Aufnahme eines in einem Gehäuse (6) mit Flansch (6a) gekapselten Lasers (7) eingelassen ist, wobei die Ausnehmung (3) zur seitlichen Ausrichtung einen größeren Querschnitt als das Lasergehäuse (6) aufweist, und die Mittelbohrung (4) am anderen Ende eine konzentrische Zylinderbohrung (5) mit einer darin fixierten, einen Anschluß-Lichtwellenleiter (10) enthaltenden Zylinderhülse (11) hat, zwischen der und dem Laser (7) in der Mittelbohrung (4) eine Abbildungsoptik (9) angeordnet ist,
   **dadurch gekennzeichnet,**
   daß die Ausnehmung (3) nach außen stufenförmig auf einen größeren als den Flanschdurchmesser des Lasergehäuses (6) abgesetzt ist und eine ringförmige Anschlagfläche (3a) für den Flansch (6a) bildet, daß im Modulgehäuse (1) drei im Dreieck auf den Flansch (6a) des Lasergehäuses (6) einwirkende Stellglieder angeordnet sind, und daß der äußere Teil der abgesetzten Ausnehmung (3) ein Innengewinde zur Aufnahme einer Ringmutter (8) hat, zwischen der und der Anschlagfläche (3a) des Modulgehäuses (1) der Flansch (6a) des Lasergehäuses (6) fixiert ist.

2. Lasermodul nach Anspruch 1, dadurch gekennzeichnet, daß die Stellglieder zum Positionieren des Lasers (7) aus auf die Mittelachse der Bohrung (4) des Modulgehäuses (1) gerichteten Stellschrauben (12) bestehen.

3. Lasermodul nach Anspruch 1 oder 2, dadurch gekennzeichnet, daß der axiale Toleranzbereich zwischen Laserchip (7) und Abbildungsoptik (9) im Modulgehäuse (1) durch Distanzscheiben ausgleichbar ist.

4. Lasermodul nach Anspruch 1 oder 2, dadurch gekennzeichnet, daß Abweichungen der optischen Achse (17) des Laserchips (7) von der mechanischen Achse (16) des Lasergehäuses (6) im Modulgehäuse (1) durch Beilegen von keilförmig abgeflachten Ausgleichsringen (18) kompensierbar sind.

**5.** Lasermodul nach einem der Ansprüche 1 bis 4, dadurch gekennzeichnet, daß das Modulgehäuse (1) eine mit Gewinde (2) versehene Stufe zur Befestigung des Lasermoduls hat.

## Claims

**1.** Laser module with a rotationally symmetrical module casing (1), which has a concentric centre bore (4) into which at one end an axially symmetrical recess (3) is incorporated for accommodating a laser (7) encapsulated in a casing (6) with flange (6a), wherein the recess (3) has for the lateral alignment a greater cross-section than the laser casing (6), and the centre bore (4) has at the other end a concentric cylinder bore (5) with a cylinder sleeve (11) fixed therein and containing a pigtail optical waveguide (10), between which cylinder sleeve (11) and the laser (7) a projection lens (9) is disposed in the centre bore (4), characterised in that

the recess (3) is offset outwardly in stages to a [diameter] greater than the flange diameter of the laser casing (6) and forms a ring-shaped stop face (3a) for the flange (6a), that there are in the module casing (1) three actuators acting on the flange (6a) of the laser casing (6) in a triangle, and that the outer part of the offset recess (3) has an internal thread for accommodating a ring nut (8), between which and the stop face (3a) of the module casing (1) the flange (6a) of the laser casing (6) is fixed.

**2.** Laser module according to claim 1, characterised in that the actuators for positioning the laser (7) consist of set screws (12) directed onto the centre line of the bore (4) of the module casing (1).

**3.** Laser module according to claim 1 or 2, characterised in that the axial tolerance range between laser chip (7) and projection lens (9) in the module casing (1) can be adjusted by means of spacers.

**4.** Laser module according to claim 1 or 2, characterised in that divergences of the optical axis (17) of the laser chip (7) from the mechanical axis (16) of the laser casing (6) in the module casing (1) can be offset by the addition of equalizing rings (18) broadened in a wedge shape.

**5.** Laser module according to one of claims 1 to 4, characterised in that the module casing (1) has a stage provided with thread (2) for the securing of the laser module.

## Revendications

**1.** Module laser comportant un boîtier (1) du module, à symétrie de rotation, qui présente un perçage médian concentrique (4) dans lequel est usiné, à une extrémité, un évidement (3), symétrique par rapport à l'axe, pour recevoir un laser (7) encapsulé dans une enceinte (6) à collet (6a), l'évidement (3) présentant, pour l'alignement latéral, une section supérieure à celle de l'enceinte (6) du laser, et le perçage médian (4) présentant, à l'autre extrémité, un perçage cylindrique concentrique (5) avec un manchon cylindrique (11) qui y est fixé, contient un guide d'ondes lumineuses de raccordement (10) et entre lequel et le laser (7) est disposée, dans le perçage médian (4) une optique (9) de formation de l'image,

caractérisé

par le fait que l'évidement (3) est étagé en forme d'échelons vers l'extérieur pour aboutir à un diamètre supérieur à celui du collet de l'enceinte (6) du laser et forme une surface annulaire d'appui (3a) pour le collet (6a), que, dans le boîtier (1) du module, sont disposés trois organes réglants agissant en triangle sur le collet (6a) de l'enceinte (6) du laser, et que la partie extérieure de l'évidement étagé (3) présente un taraudage pour recevoir une bague filetée extérieurement entre laquelle et la surface d'appui (3a) du boîtier (1) du module est fixé le collet (6a) de l'enceinte (6) du laser.

**2.** Module laser selon la revendication 1, caractérisé par le fait que les organes réglants prévus pour positionner le laser (7) sont constitués de vis réglantes (12) orientées sur l'axe médian du perçage (4) du boîtier (1) du module.

**3.** Module laser selon la revendication 1 ou 2. caractérisé par le fait que la plage de tolérance axiale entre la microplaquette (7) du laser et l'optique (9) de formation de l'image peut être compensée dans le boîtier (1) du module par des rondelles d'écartement.

**4.** Module laser selon la revendication 1 ou 2, caractérisé par le fait que les écarts de l'axe optique (17) de la microplaquette (7) du laser par rapport à l'axe mécanique (16) de l'enceinte (6) du laser peuvent être compensés dans le boîtier (1) du module par calage au moyen de rondelles de compensation (18) chanfreinées en forme de coin.

5. Module laser selon l'une des revendications 1 à 4, caractérisé par le fait que le boîtier (1) du module présente. pour fixation du module laser, un étage muni d'un filetage (2).

FIG.1

FIG.2

FIG.3

FIG.4

FIG.5